# EUROPEAN PATENT APPLICATION

(11) **EP 4 394 590 A1**
(43) Date of publication of application: **03.07.2024**
(21) Application number: 22307044.2
(22) Date of filing: 26.12.2022
(51) Int. Cl.: G06F 9/445, G06F 8/54, G06F 8/61

(54) **A METHOD FOR GENERATING AN UNLINKED PROGRAM CODE TO BE TRANSFERRED FROM A SOURCE DEVICE TO A TARGET DEVICE**

(71) Applicant: THALES DIS FRANCE SAS, 92190 Meudon (FR)
(72) Inventor: REGNAULT, Nicolas, 13600 LA CIOTAT (FR); IMOUCHA, Franck, 13390 AURIOL (FR); MARSEILLE, François-Xavier, 78160 MARLY LE ROI (FR); PHAN, Ly Thanh, 92350 LE PLESSIS ROBINSON (FR); PRACA, Denis, 13080 LUYNES (FR)
(74) Representative: Scheer, Luc

(57) **Abstract**

The present invention proposes a method for generating an unlinked program code to be transferred from a source device to a target device, the source device comprising a program code linked to the device, called linked program code, the method comprising:
- detecting bytes in the linked program code, the bytes belonging to a program to be transferred from the source device to the target device;
- generating a Component, called Reverse Link Component, comprising bytes of the unlinked program code that have to be modified by the target device, by creating a linked program code, the bytes being concatenated in the Reverse Link Component in the order in which they are linked in the program code;
- Regenerating the unlinked program code to be transferred from the source device to the target device by using the Reverse Link Component.

## Description

The domain of the invention is telecommunication.

More precisely, the present invention concerns a Method and a system implemented in a device cooperating with a terminal permitting to transfer a code to another terminal (peer-to peer transfer).

This transfer can for example consist in transferring a subscription profile of a MNO from a source device to a target device, each device being constituted by a terminal (fixed or mobile) cooperating with a secure element, like a Sim card, a UICC, a USIM, an eUICC (embedded UICC) or a iUICC (integrated UICC).

It is also possible to have to transfer a banking application or an identity application or another application from the source device to the target device.

The following description will be focused on the transfer of a subscription profile code from a source device to a target device, but applies to any transfer of code from the source device to the target device.

Transferring a profile from a device to another device requires transferring applet's code.

After having downloaded in a source device, for example by http, a code, this code is executed in the source device and is therefore linked to the features of the terminal and/or to the features of the secure element with which this device cooperates. Parameters are modified to a proprietary encoding which is not transferable to another device. For memory constraints, the unlinked code downloaded on the source device is overwritten by the linked code and the unlinked code is therefore no more available to be transferred to the target device. This means that the original code can be saved before linking it but this code usually requires a lot of memory space. Saving this code before linking would double the memory space used by the code.

In Javacard, the code is an applet comprised in a cap file and in a cap file there are different components. Among these is the Method Component which contains the applet's code. So the naive solution, if we want to be able to export this Method Component, is to load the components of the applet and to duplicate the components that we know we will need to modify and export later on. For example, we will duplicate the Method Component and we will have an identical version A, an identical version B, then we will link version A, which would mean that we will use the linked version and keep version B for the export. The problem is that it doubles the memory size needed for the applet's code.

The present invention aims to solve this problem. More precisely, the invention has the purpose to regenerate the original code from the linked code, in order to transfer the reconstituted original code from the source device to a target device.

The problem is solved by saving only modified parameters to restore them before exporting the original code to a target device, in a peer to peer transfer that can be done using any possible link between the source and the target device (Wifi, Bluetooth,...).

Saving modified parameters also requires having a way to save/restore correctly the corresponding parameters at the correct position into the code.

The present invention meets this objective thanks to a method for generating an unlinked program code to be transferred from a source device to a target device, the source device comprising a program code linked to the device, called linked program code, the method comprising:
- detecting bytes in the linked program code, the bytes belonging to a program to be transferred from the source device to the target device;
- generating a Component, called Reverse Link Component, comprising bytes of the unlinked program code that have to be modified by the target device, by creating a linked program code, the bytes being concatenated in the Reverse Link Component in the order in which they are linked in the program code;
- Regenerating the unlinked program code to be transferred from the source device to the target device by using the Reverse Link Component.

I a first preferred embodiment, this method is applied to Javacard and the Reverse Link Component is created by using the Reference Location Component of a Cap file, the Reference Location Component indicating bytes of the Method Component to be linked, the bytes being ordered as they are linked in the Method Component.

I a second preferred embodiment, this method is applied to Javacard and the Reverse Link Component is created by parsing the Method Component of a Cap file and detecting in the Method Component Javacard instructions preceding bytes to be linked.

The present invention will be better understood by reading the following description of the two figures that represent:
- Figure 1 the different elements that are employed for implementing the Method of the invention;
- Figure 2 a focus on the generation of the Reverse Link Component according to the invention.

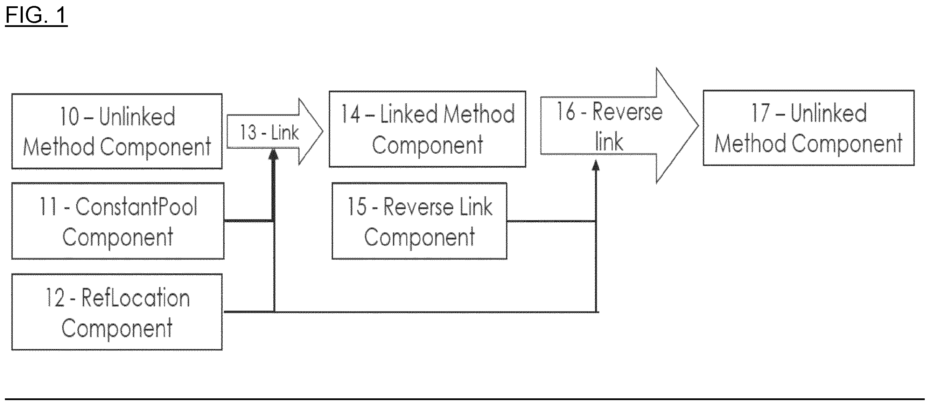

Figure 1 represents the different elements that are employed for implementing the Method of the invention.

In this figure, the elements that are all comprised in the source device are:
- An Unlinked Method Component 10 ;
- A ConstantPool Component 11 ;
- A RefLocation Component 12 ;
- A linker 13 ;
- A Linked Method Component 14 ;
- A Reverse Link Component 15 ;
- A Reverse Link 16 ;
- A generated Unlinked Method Component 17.

The Unlinked Method Component 10 comprises the original program code that has been downloaded from a dedicated server to the source device, for example by http or https.

The ConstantPool Component 11 is a part of .class file (and its in-memory representation) that contains constants needed to run the original program code of that class.

These constants include literals specified by the programmer and symbolic references generated by compiler. Symbolic references are basically names of classes, Methods and fields referenced from the code. These references are used by the JVM to link your code to other classes it depends on.

The RefLocation Component 12 represents lists of offsets into the info item of the Method Component to items that contain indices into the constant_pool array of the ConstantPool Component. This includes all constant pool index operands of instructions, and all non-zero catch_type_index items of the exception_handlers array. The catch_type_index items that have the value of 0 are not included since they represent finally blocks instead of particular exception classes.

Some of the constant pool indices are represented in one-byte values while others are represented in two-byte values. Operands of getfield_T and putfield_T instructions are one-byte constant pool indices. Most other indices in a Method Component are two-byte values.

The specification of the Reference Location Component structure is defined in the document "Java Card^{™} Platform Virtual Machine Specification, Classic Edition" as: reference_location_component {

```
   u1 tag
   u2 size
   u2 byte_index_count
   u1 offsets_to_byte_indices[byte_index_count]
   u2 byte2_index_count
   u1 offsets_to_byte2_indices[byte2_index_count] }
```

The items of the reference_location_component structure are as follows:
- tag

The tag item has the value COMPONENT_ReferenceLocation.
- size

The size item indicates the number of bytes in the reference_location_component structure, excluding the tag and size items. The value of the size item must be greater than zero.
- byte_index_count

The byte_index_count item represents the number of elements in the offsets_to_byte_indices array.
- offsets_to_byte_indices

The offsets_to_byte_indices item represents an array of 1-byte jump offsets into the info item of the Method Component to each 1-byte constant_pool array index. Each entry represents the number of bytes (or distance) between the current index to the next.

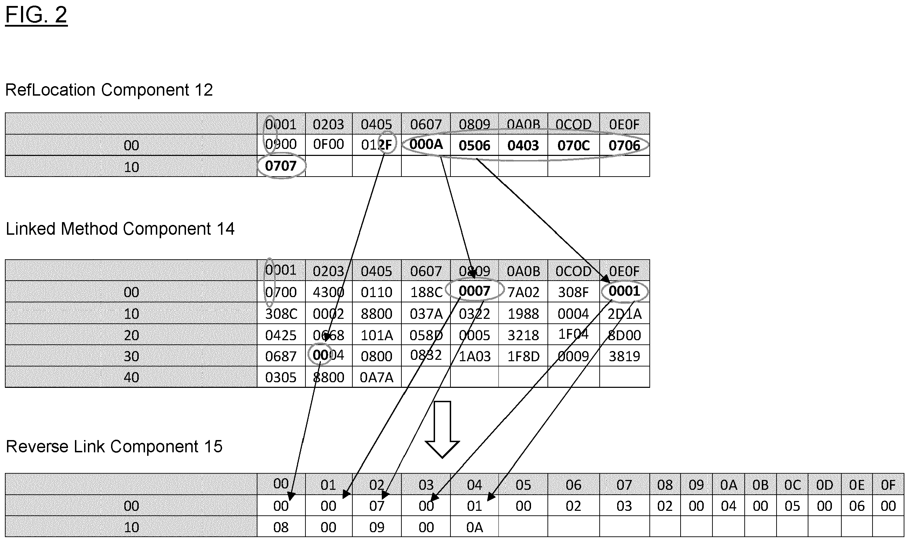

This will be seen thereafter by reading the description of figure 2.

The linker 13 is a function that links the original program code with the ConstantPool Component 11 and the RefLocation Component 13. The result of this linking is the Linked Method Component 14. This Linked Method Component 14 contains the program code linked to the device where the Unlinked Method Component 10 has been downloaded.

As already said, the Unlinked Method Component 10 is deleted after generation of the Linked Method Component 14 for memory constraints.

Figure 2 shows, among other things, how the Linked Method Component 14 is generated.

The Linked Method Component 14 is generated from the Unlinked Method Component 10, the ConstantPool Component 11 and the RefLocation Component 12.

The RefLocation Component 12 has the purpose to help the linker 13 to generate the Linked Method Component 14.

In the RefLocation Component 12 we have principally two tables of indexes that will indicate to the linker 13 where it has to modify a value of the Unlinked Method Component 10.

The first table indicates the places where there is only one byte to be modified and the second table the places where there are two bytes to be modified.

For example, as represented in figure 2, the RefLocation Component indicates in column 04 line 00 that there is only one byte (value 01) to be modified. This byte to be modified is following this indication and is here 2F (column 05, line 00). This means that at the offset 2F, the following byte (00 at column 06 and line 00) has to be modified in another value.

The following byte is OA (column 07, line 00). This indicated that the 10 following bytes have to be changed.

For the first index (05, column 08, line 00), the bytes 0007 have to be modified. For the next index (06, column 09, line 00), the two bytes 0001 (columns 0E and 0F, line 00) have to be changed, and so on.

At the end of this linking procedure, all bytes of the Method Component 10 which are pointed by the RefLocation have been changed in view of the device's features. The original Unlinked Method Component 10 is then updated.

The preceding Method is known from the state of the art.

The invention proposes then, in order to regenerate the Unlinked Method Component 10 (for purposes to send it peer to peer to another device), to generate a Reverse Link Component 15 that, when applied with the Linked Method Component 14 through the Reverse Link 16, permits to obtain an Unlinked Method Component 17 identical to the Unlinked Method Component 10. This can be achieved by two different way: with or without the Reflocation component 13.

The first way is explained in regard of figure 2 that represents the generation of the Reverse Link Component 15 according to the invention by using the RefLocation Component 12.

The invention proposes, at the same time as we make this Link at step 13, to backup in the Reverse Link Component 15 all the values that were linked in the order of the tables.

For example, regarding figure 2, the byte 00 of column 02 line 30 of the Linked Method Component 14 will be saved in the Reverse Link Component 15 in column 00, line 00, the next bytes 00 and 07 will be saved in the Reverse Link Component 15 in columns 01 and 02 respectively, line 00, the next bytes 00 and 01 will be saved in the Reverse Link Component 15 in columns 03 and 04 respectively, and so on.

So the invention comprises the saving in the order where they appear in the Linked Method Component 14 all the values that were linked and the generated Reverse Link Component 15 comprises bytes of the unlinked program code (comprised in the Linked Method Component 14) that have to be modified by the target device, by creating a linked program code, the bytes being concatenated in the Reverse Link Component 15 in the order in which they are linked in the program code.

For generating the Unlinked Method Component 17, the Reverse Link 16 uses the same tables: By looking in the RefLocation Component 12, the first byte to be considered is 2F and this byte refers to the first byte of the Reverse Link Component 15, i.e. 00. The second value are bytes 00 and 0A that are the next in the Reverse Link Component 15, and so on. The bytes of the Reverse Link Component 15 replace then those indicated in the RefLocation Component 12 in the Linked Method Component 14. It is thus possible to regenerate an Unlinked Method Component 17 identical to the Unlinked Method Component 10.

In a preferred embodiment, applied to Java code, the Reverse Link Component 15 is created by using the Reference Location Component 12 of a Cap file, the Reference Location Component 12 comprising a first table indicating where one byte of the linked program code comprised in a Method Component has to be modified and a second table indicating where two bytes of the linked program code also comprised in the Method Component have to be modified, based on a relative offset regarding the preceding byte that has been modified.

In short, the Reverse Link Component is created by parsing the Method Component of a Cap file and in the Method Component Javacard instructions preceding bytes to be linked are detected.

The invention also proposes a second way to regenerate the Unlinked Method Component 10. This second solution does not need to use the Reflocation (Reference Location) Component 13 and consists in parsing the bytecode of the Linked Method Component (more generally of the linked program code).

So here for example, as shown in figure 2, we have in column 07, line 00 the byte 8C and it is known that in Java, after 8C there is always a parameter of two bytes (0007) to link. After that, we have the bytecode 8F (column 0D, line 00), which refers to two bytecodes to be linked (00 and 01). So it is possible to delete the RefLocation Component 12 and in this case, bytes to be considered will be in a different order as described for the first way to solve the problem and will be saved in the order in which they appear in the bytecode.

For practical reasons (to be standard compliant) however, it is better to keep the RefLocation Component 12 for transmitting it to the target device.

But it is also possible to regenerate the RefLocation Component 12, for example on the fly. This would be a third solution since when it is know which bytecode has to be linked, it is possible to completely regenerate the RefLocation Component 12. This is what the off card does. It can simply consist in parsing the bytecode and recognizing bytecodes that have a parameter to link.

This solution thus consists in creating a Reverse Link Component by parsing the Method Component of a Cap file and detecting in this Method Component Javacard instructions preceding bytes to be linked.

The proposed invention reduces the amount of memory space required to export code in "unlinked" state context. For telecommunication applications, it allows peer to peer transfer of the code (no data) of a profile from one device to another. When code that is linked to a device is transferred to another device, the result of this link is always something proprietary which can even for the same product be different from one secure element to another, depending on the order in which the applets were loaded and different events. So to transfer code, it is necessary to delink it, i.e. cancel this link.

## Claims

1. A method for generating an unlinked program code to be transferred from a source device to a target device, said source device comprising a program code linked to said device, called linked program code, said method comprising:
- detecting bytes in said linked program code, said bytes belonging to a program to be transferred from said source device to said target device;
- generating a Component, called Reverse Link Component, comprising bytes of said unlinked program code that have to be modified by said target device, by creating a linked program code, said bytes being concatenated in said Reverse Link Component in the order in which they are linked in said program code;
- Regenerating said unlinked program code to be transferred from said source device to said target device by using said Reverse Link Component.

2. A Method according to claim 1 applied to Javacard, wherein said Reverse Link Component is created by using the Reference Location Component of a Cap file, said Reference Location Component indicating bytes of the Method Component to be linked, said bytes being ordered as they are linked in said Method Component.

3. A Method according to claim 1 applied to Javacard, wherein said Reverse Link Component is created by parsing the Method Component of a Cap file and detecting in said Method Component Javacard instructions preceding bytes to be linked.
